# FASCICULE DE BREVET EUROPEEN

(11) **EP 2 071 989 B1**
(45) Date de publication et mention de la délivrance du brevet: **24.07.2013**
(21) Numéro de dépôt: 08356154.8
(22) Date de dépôt: 16.12.2008
(51) Int. Cl.: A47J 43/07, A47J 44/00

(54) **Récipient de travail pour appareil électroménager de préparation culinaire et appareil muni d'un tel récipient**
Arbeitsbehälter für Haushaltsgerät zur Essenszubereitung und Gerät, das mit einem solchen Behälter ausgestattet ist
Work container for a household cooking appliance and appliance equipped with such a container

(30) Priorité: 19.12.2007 FR 0708863
(43) Date de publication de la demande: 24.06.2009
(73) Titulaire: SEB S.A., 69130 Ecully (FR)
(72) Inventeur: Lemarie, Christophe, 53470 Martigne sur Mayenne (FR); Beaudet, Olivier, 61140 Geneslay (FR); Legay, Guy, 53440 Grazay (FR)
(74) Mandataire: Kiehl, Hubert

(56) Documents cités:
- DE-A1- 3 933 036
- US-A- 5 323 973
- US-A1- 2007 165 484

## Description

La présente invention se rapporte au domaine technique général des appareils électroménagers de préparation culinaire comportant un boîtier moteur et un récipient de travail comprenant un outil rotatif destiné à être entraîné en rotation par le boîtier moteur et se rapporte plus particulièrement à un récipient de travail de forme particulière.

Il est connu, du brevet US 5 323 973, un appareil de préparation culinaire de type blender comportant un boîtier moteur et un récipient de travail comportant un outil rotatif destiné à être entraîné en rotation par le boîtier moteur. Un tel appareil blender comporte un récipient de forme oblongue muni d'un outil excentré et de nervures internes verticales permettant de perturber le flux circulaire généré par le mouvement rotatif de l'outil, les aliments ayant tendance à remonter verticalement le long des nervures du récipient puis à retomber sur l'outil.

Cependant, un tel récipient comporte une enveloppe présentant une excroissance latérale en porte à faux par rapport au fond du récipient, ce qui présente l'inconvénient de rendre le récipient relativement instable lorsqu'il est posé sur une table. De plus, un tel récipient génère un flux dans lequel les aliments remontent le long des parois pour retomber violement au dessus de l'outil qui présente l'inconvénient de provoquer une charge importante sur l'outil rotatif, notamment lorsque le récipient contient beaucoup d'aliments. A l'inverse, un tel récipient présente une zone autour de l'outil où la paroi du récipient est relativement éloignée de l'outil, ce qui ne permet pas de mixer efficacement de faibles quantités d'aliments, ces derniers étant expulsés rapidement en dehors de la zone de travail de l'outil.

Enfin, un tel récipient muni de nombreuses nervures présente l'inconvénient d'être difficile à nettoyer, la base des nervures formant des recoins dans lesquels les aliments ont tendance à s'agglomérer.

Il est également connu, de la demande de brevet US 2007/165484, un appareil de préparation culinaire comprenant un récipient de travail comportant un fond muni d'une partie basse recevant un outil rotatif et d'une partie surélevée présentant une surface inclinée en direction de la partie basse.

Cependant, un tel récipient ne permet pas un bon brassage des aliments lorsque peu d'aliments sont introduits dans le récipient.

Aussi, un but de la présente invention est de proposer un récipient de travail pour appareil électroménager de préparation culinaire qui permette de traiter facilement de faibles quantités d'aliments et qui assure un flux de mixage progressif ne réclamant pas beaucoup de puissance au niveau de l'outil. Un autre but de la présente invention est de proposer un récipient de travail qui soit stable et facile à nettoyer.

A cet effet, l'invention se rapporte à un récipient de travail, destiné à équiper un appareil électroménager de préparation culinaire de type blender, comprenant une enveloppe définissant un volume de traitement des aliments au dessus d'un fond comportant un outil rotatif destiné à être entraîné en rotation par un moteur, et comportant, dans le prolongement de l'enveloppe, une jupe s'étendant sous le fond du récipient, l'outil rotatif comportant au moins une lame inférieure s'étendant à proximité du fond du récipient, caractérisé en ce que le fond du récipient comporte une partie basse recevant l'outil rotatif et une partie surélevée formant une marche dans le fond du récipient, la partie surélevée présentant une surface inclinée en direction de la partie basse et s'étendant à un niveau supérieur à celui de la lame inférieure de l'outil rotatif.

Selon une autre caractéristique de l'invention, l'outil rotatif est excentré dans le fond du récipient.

Selon une autre caractéristique de l'invention, l'enveloppe du récipient est démunie de nervure.

Selon une autre caractéristique de l'invention, la partie basse et la partie surélevée du fond du récipient sont reliées entre elles par une surface courbe présentant un point d'inflexion.

Selon encore une autre caractéristique de l'invention, la pente de la surface courbe au niveau du point d'inflexion forme un angle de plus de 45° par rapport à l'horizontal.

Selon encore une autre caractéristique de l'invention, le fond du récipient présente un contour oblong, la partie basse étant disposée à une extrémité longitudinale du fond du récipient et la partie surélevée étant disposée à l'autre extrémité longitudinale du fond du récipient.

Selon une autre caractéristique de l'invention, le fond du récipient présente un contour constitué par deux extrémités semi-circulaires reliées entre elles par deux droites parallèles.

Selon une autre caractéristique de l'invention, l'enveloppe du récipient présente une section transversale de forme semblable à celle du fond du récipient, l'enveloppe étant faiblement divergente du fond vers le sommet du récipient.

Selon une autre caractéristique de l'invention, le récipient comporte un couvercle comprenant une ouverture centrale pour l'introduction des aliments.

Selon une autre caractéristique de l'invention, le fond et l'enveloppe du récipient définissent une cavité comportant, sur toute la périphérie de l'outil rotatif, une paroi distante de moins de 1 cm de la trajectoire parcourue par l'extrémité de la lame inférieure de l'outil rotatif.

L'invention concerne également un appareil électroménager de préparation culinaire comportant un boîtier renfermant un moteur et comportant un récipient de travail comprenant un outil rotatif entraîné en rotation par le moteur, caractérisé en ce que le récipient est conforme au récipient selon l'invention précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil blender selon un mode particulier de réalisation de l'invention,
- la figure 2 est une vue en coupe longitudinale de l'appareil de la figure 1.

Seuls les éléments nécessaires à la compréhension de l'invention ont été représentés. Pour faciliter la lecture des dessins les mêmes éléments portent les mêmes références d'une figure à l'autre.

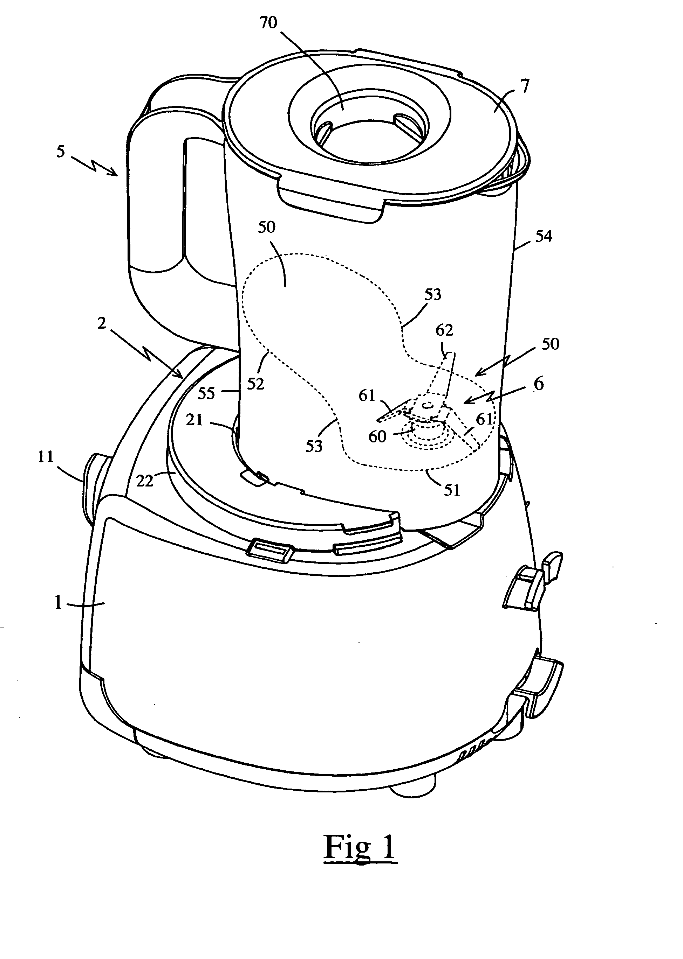

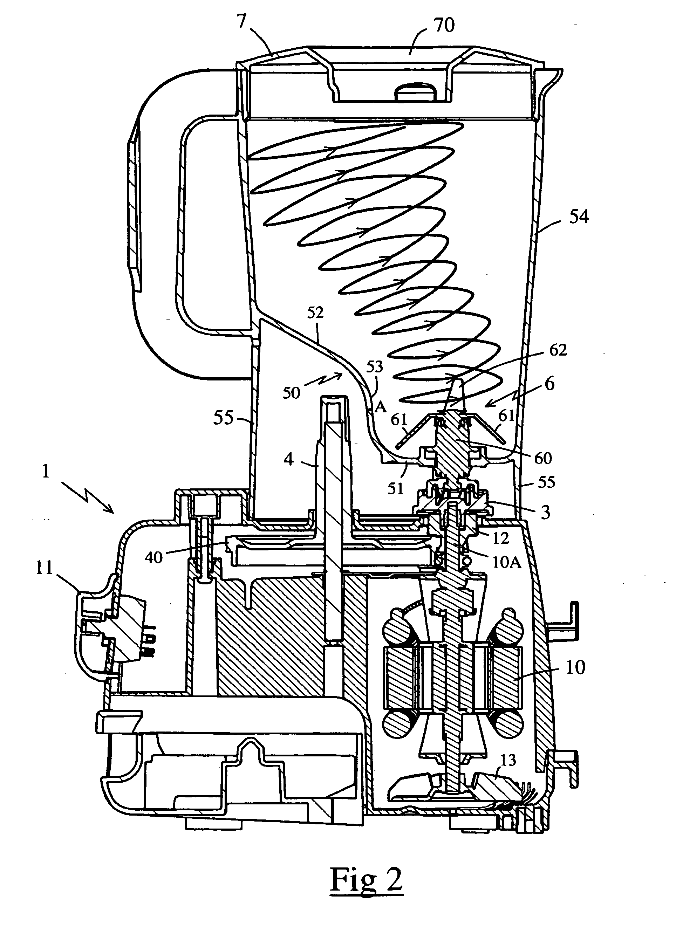

Les figures 1 et 2 illustrent un appareil de préparation culinaire comportant un boîtier 1 comportant une face supérieure présentant un socle de réception 2 comportant un entraîneur 3 excentré présentant la forme d'une bague dentée faisant saillie sur l'arrière du boîtier 1 et un entraîneur central 4 présentant la forme d'un arbre muni de nervures s'étendant sur une hauteur plus importante au centre du boîtier 1.

Le socle de réception 2 comporte une première empreinte 21, en creux, présentant un contour oblong adapté pour recevoir l'extrémité inférieure d'un récipient blender 5 comportant un fond 50 recevant un outil rotatif 6 excentré dans le fond 50 du récipient, représentés en pointillé sur la figure 1, et dont l'extrémité inférieure vient s'accoupler avec l'entraîneur 3 excentré du boîtier 1.

L'outil rotatif 6 comporte, de manière connue en soi, un moyeu central 60 cylindrique supportant une lame inférieure 61 présentant deux branches incurvées vers le bas et une lame supérieure 62 présentant deux branches incurvées vers le haut, les lames inférieure 61 et supérieure 62 étant disposées à 90° l'une de l'autre.

De manière avantageuse, le fond 50 du récipient comporte un contour de forme oblongue présentant deux extrémités semi-circulaires reliées entre elles par deux droites parallèles et le récipient 5 comporte une enveloppe 54, s'étendant au dessus du fond 50 du récipient, présentant une section transversale de forme similaire à celle du fond 50 du récipient, l'enveloppe 54 présentant une forme légèrement divergente du fond 50 vers le sommet du récipient 5. Le récipient comporte également, dans le prolongement de l'enveloppe 54, une jupe 55 s'étendant sous le fond 50 du récipient et présentant une forme oblongue complémentaire à la forme de la première empreinte 21 du socle 2 de réception.

Le récipient 5 est préférentiellement fermé par un couvercle 7 comportant une ouverture centrale 70 pouvant être fermée par un capuchon amovible, non représenté sur les figures, cette ouverture 70 permettant l'introduction d'aliments dans le récipient au cours du fonctionnement de l'appareil.

Le socle de réception 2 comporte également une seconde empreinte 22, en relief, présentant un contour sensiblement circulaire pouvant recevoir l'extrémité inférieure d'un récipient de type hachoir, non représenté sur les figures, renfermant un outil venant s'accoupler avec l'entraîneur 4 central.

Conformément à la figure 2, le boîtier 1 renferme un moteur électrique 10 dont le fonctionnement est commandé par un bouton de commande 11 disposé sur la face avant du boîtier 1, ce moteur étant disposé dans la partie arrière du boîtier 1 et comportant un arbre de sortie 10A dont l'extrémité supérieure est accouplée directement à l'entraîneur excentré 3.

L'arbre de sortie 10A du moteur 10 supporte un pignon 12 disposé sous l'entraîneur 3 excentré, ce pignon 12 étant disposé à l'intérieur du boîtier 1 et présentant un diamètre de l'ordre de 15 mm. Ce pignon 12 est engrené sur une roue dentée 40 d'un diamètre de l'ordre de 100 mm qui s'étend sous le socle de réception 2 et qui est solidaire de l'entraîneur central 4 de manière à entraîner ce dernier avec une vitesse réduite de plus de six fois par rapport à la vitesse de rotation du moteur 10.

Afin de favoriser le refroidissement du moteur, l'extrémité inférieure de l'arbre 10A est reliée à un ventilateur de refroidissement 13 et la coque inférieure du boîtier 1 comporte des fentes pour la circulation de l'air sous ce ventilateur 13.

Le moteur 10 est préférentiellement un moteur de type universel d'une puissance comprise entre 500W et 700W.

Plus particulièrement selon l'invention, le fond 50 du récipient comporte une marche comprenant une partie basse 51 disposée à une extrémité longitudinale du fond du récipient et une partie surélevée 52 disposée à l'autre extrémité longitudinale du fond du récipient, la partie basse 51 recevant l'outil rotatif 6 et la partie surélevée 52 présentant une surface inclinée de l'ordre de 30° par rapport à l'horizontal, en direction de l'outil rotatif 6.

La partie surélevée 52 du fond du récipient s'étend au dessus de l'entraîneur 4 central du boîtier 1 et se trouve à un niveau supérieur à celui de la lame inférieure 61 de l'outil rotatif de sorte que la lame inférieure 61 de l'outil rotatif se retrouve baignée dans une cavité recevant progressivement l'ensemble des aliments s'écoulant sur la partie surélevée 52. De manière préférentielle, la cavité ainsi formée présente une profondeur de l'ordre de 3 cm et comporte sur toute la périphérie de l'outil, une paroi distante de moins de 1 cm de la trajectoire parcourue par l'extrémité de la lame inférieure 61 de l'outil rotatif.

De manière avantageuse, l'enveloppe 54 du récipient comporte une surface interne lisse, c'est-à-dire démunie de nervure, et la partie basse 51 du fond du récipient présente une surface sensiblement plane, s'étendant autour de l'outil rotatif 6, qui est reliée à la partie surélevée 52 par une surface courbe 53 comportant un point d'inflexion A à hauteur de l'extrémité supérieure du moyeu 60 de l'outil rotatif.

A titre d'exemple, la surface courbe 53 présente une première partie, faisant la jonction entre le point d'inflexion A et la partie basse 51, présentant un rayon de courbure de l'ordre de 2 cm et une deuxième partie, établissant la jonction entre le point d'inflexion A et la partie surélevée 52, présentant un rayon de courbure de l'ordre de 3 cm, la pente de la surface courbe 53 au niveau du point d'inflexion A étant de l'ordre de 85° par rapport à l'horizontal.

Un tel récipient présente l'avantage de permettre l'obtention d'un flux de mixage générant un vortex suivant les flèches en spirale illustrées sur la figure 2, générant un excellent brassage des aliments dans l'ensemble du récipient, tout en chargeant peu l'outil rotatif permettant ainsi d'utiliser un moteur de faible puissance. Un tel récipient permet également de traiter de faibles quantités d'ingrédients avec une très grande efficacité, la présence de la marche empêchant la centrifugation des aliments en dehors de la cavité.

De plus, l'enveloppe du récipient étant démunie de nervure interne, elle présente l'avantage d'une très grande facilité de nettoyage.

Enfin, la marche dans le fond du récipient assure une déviation du vortex depuis l'outil rotatif excentré vers le centre du récipient de sorte que le vortex balaye la partie centrale du couvercle en haut du récipient, évitant ainsi la remonté de liquide par l'ouverture centrale du couvercle lors du fonctionnement de l'appareil.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, la forme de la section transversale du récipient pourra être différente.

## Revendications

1. Récipient de travail (5), destiné à équiper un appareil électroménager de préparation culinaire de type blender, comprenant une enveloppe (54) définissant un volume de traitement des aliments au dessus d'un fond (50) comportant un outil rotatif (6) destiné à être entraîné en rotation par un moteur (10) et comportant, dans le prolongement de l'enveloppe (54), une jupe (55) s'étendant sous le fond (50) du récipient, ledit outil rotatif (6) comportant au moins une lame inférieure (61) s'étendant à proximité du fond (50) du récipient, le fond (50) du récipient comportant une partie basse (51) recevant l'outil rotatif (6) et une partie surélevée (52) formant une marche dans le fond (50) du récipient, la partie surélevée (52) présentant une surface inclinée en direction de la partie basse (51) et s'étendant à un niveau supérieur à celui de la lame inférieure (61) de l'outil rotatif (6), **caractérisé en ce que** ledit outil rotatif (6) est excentré dans le fond (50) du récipient (5) et **en ce que** la partie basse (51) et la partie surélevée (52) du fond du récipient sont reliées entre elles par une surface courbe (53) présentant un point d'inflexion (A).

2. Récipient selon la revendication 1, **caractérisé en ce que** l'enveloppe (54) du récipient est démunie de nervure.

3. Récipient selon l'une quelconque des revendications 1 à 2, **caractérisé en ce que** la pente de la surface courbe (53) au niveau du point d'inflexion (A) forme un angle de plus de 45° par rapport à l'horizontal.

4. Récipient selon l'une quelconque des revendications 1 à 3, **caractérisé en ce que** le fond (50) du récipient présente un contour oblong et **en ce que** la partie basse (51) est disposée à une extrémité longitudinale du fond (50) du récipient et la partie surélevée (52) étant disposée à l'autre extrémité longitudinale du fond (50) du récipient (5).

5. Récipient selon la revendication 4, **caractérisé en ce que** le fond (50) du récipient présente un contour constitué par deux extrémités semi-circulaires reliées entre elles par deux droites parallèles.

6. Récipient selon l'une quelconque des revendications 1 à 5, **caractérisé en ce que** l'enveloppe (54) du récipient présente une section transversale de forme semblable à celle du fond (50) du récipient, l'enveloppe (54) étant faiblement divergente du fond vers le sommet du récipient (5).

7. Récipient selon l'une quelconque des revendications 1 à 6, **caractérisé en ce que** le récipient (5) comporte un couvercle (7) comprenant une ouverture (70) centrale pour l'introduction des aliments.

8. Récipient selon l'une quelconque des revendications 1 à 7, **caractérisé en ce que** le fond (50) et l'enveloppe (54) du récipient définissent une cavité comportant, sur toute la périphérie de l'outil rotatif (6), une paroi distante de moins de 1 cm de la trajectoire parcourue par l'extrémité de la lame inférieure (61) de l'outil rotatif.

9. Appareil électroménager de préparation culinaire comportant un boîtier (1) renfermant un moteur (10) et comportant un récipient de travail (5) comprenant un outil rotatif (6) entraîné en rotation par ledit moteur (10), **caractérisé en ce que** ledit récipient est conforme à l'une des revendications 1 à 8.

## Patentansprüche

1. Arbeitsbehälter (5) zum Ausstatten eines Elektrohaushaltsgerätes für kulinarische Zubereitungen von der Art eines Standmixers, umfassend eine Umwandung (54), die ein Volumen zur Behandlung von Lebensmitteln über einem Boden (50) definiert, der ein Drehwerkzeug (6) umfasst, das dazu bestimmt ist, von einem Motor (10) in Drehung versetzt und werden, und in Verlängerung der Umwandung (54) umfassend eine Abdeckung (55), die sich unter dem Boden (50) des Behälters erstreckt, wobei das Drehwerkzeug (6) wenigstens eine untere Klinge (61) umfasst, die sich in der Nähe des Bodens (50) des Behälters erstreckt, wobei der Boden (50) des Behälters einen unteren Teil (51), der das Drehwerkzeug (6) aufnimmt, und einen erhöhten Teil (52) umfasst, der eine Stufe in den Boden (50) des Behälters bildet, wobei der erhöhte Teil (52) eine Fläche aufweist, die in Richtung des unteren Teils (51) geneigt ist und sich auf eine Höhe erstreckt, die über jener der unteren Klinge (61) des Drehwerkzeuges (6) liegt, **dadurch gekennzeichnet, dass** das Drehwerkzeug (6) außermittig im Boden (50) des Behälters (5) angeordnet ist, und dadurch, dass der untere Teil (51) und der erhöhte Teil (52) des Bodens des Behälters durch eine gekrümmte Fläche (53) miteinander verbunden sind, die einen Wendepunkt (A) aufweist.

2. Behälter nach Anspruch 1, **dadurch gekennzeichnet, dass** die Umwandung (54) des Behälters rippenlos ist.

3. Behälter nach einem der Ansprüche 1 bis 2, **dadurch gekennzeichnet, dass** die Steigung der gekrümmten Fläche (53) auf Höhe des Wendepunktes (A) einen Winkel von mehr als 45° in Bezug auf die Waagrechte bildet.

4. Behälter nach einem der Ansprüche 1 bis 3, **dadurch gekennzeichnet, dass** der Boden (50) des Behälters einen länglichen Umfang aufweist, und dadurch, dass der untere Teil (51) an einem Längsende des Bodens (50) des Behälters angeordnet ist, wobei der erhöhte Teil (52) am anderen Längsende des Bodens (50) des Behälters (5) angeordnet ist.

5. Behälter nach Anspruch 4, **dadurch gekennzeichnet, dass** der Boden (50) des Behälters einen Umfang aufweist, der von zwei halbrunden Enden gebildet wird, die durch zwei parallele Geraden miteinander verbunden sind.

6. Behälter nach einem der Ansprüche 1 bis 5, **dadurch gekennzeichnet, dass** die Umwandung (54) des Behälters einen Querschnitt aufweist, dessen Form jener des Bodens (50) des Behälters ähnlich ist, wobei die Umwandung (54) vom Boden zur Oberseite des Behälters (5) leicht auseinander laufend ist.

7. Behälter nach einem der Ansprüche 1 bis 6, **dadurch gekennzeichnet, dass** der Behälter (5) einen Deckel (7) mit einer mittigen Öffnung (70) zum Einführen der Lebensmittel umfasst.

8. Behälter nach einem der Ansprüche 1 bis 7, **dadurch gekennzeichnet, dass** der Boden (50) und die Umwandung (54) des Behälters einen Hohlraum definieren, der um den gesamten Umkreis des Drehwerkzeuges (6) eine Wand umfasst, die wenigstens 1 cm von der Bahn beabstandet ist, die vom Ende der unteren Klinge (61) des Drehwerkzeuges durchlaufen wird.

9. Elektrohaushaltsgerät für kulinarische Zubereitungen, umfassend ein Gehäuse (1), das einen Motor (10) einschließt, und einen Arbeitsbehälter (5), das ein Drehwerkzeug (6) aufweist, das vom Motor (10) in Drehung versetzt wird, **dadurch gekennzeichnet, dass** der Behälter einem der Ansprüche 1 bis 8 entspricht.

## Claims

1. A working container (5), for an electrical household food preparation appliance such as a blender, comprising a casing (54) defining a volume wherein food is processed above a bottom (50) comprising a rotary tool (6) to be driven in rotation by a motor (10) and comprising, in the extension of the casing (54), a skirt (55) extending below the bottom (50) of the container, said rotary tool (6) comprising at least one lower blade (61) extending close to the bottom (50) of the container, the bottom (50) of the container having a lower portion (51) receiving the rotary tool (6) and a raised portion (52) forming a step in the bottom (50) of the container, the raised portion (52) having a surface inclined towards the lower portion (51) and extending to a level higher than that of the lower blade (61) of the rotary tool (6), **characterised in that** the rotary tool (6) is arranged eccentrically in the bottom (50) of the container (5) and **in that** the lower portion (51) and the raised portion (52) of the container bottom are connected with each other by a curved surface (53) having a point of inflection (A).

2. A container according to claim 1, **characterised in that** the casing (54) of the container is devoid of rib.

3. A container according to any one of claims 1 to 2, **characterised in that** the slope of the curved surface (53) at the point of inflection (A) forms an angle of more than 45° relative to the horizontal.

4. A container according to any one of claims 1 to 3, **characterised in that** the bottom (50) of the container has an oblong contour and **in that** the lower portion (51) is arranged at one longitudinal end of the bottom (50) of the container and the raised portion (52) being arranged at the other longitudinal end of the bottom (50) of the container (5).

5. A container according to claim 4, characterised that the bottom (50) of the container has a contour consisting of two semi-circular ends joined together by two parallel lines.

6. A container according to any one of claims 1 to 5, **characterised in that** the casing (54) of the container has a cross-section with a shape similar to that of the bottom (50) of the container, the casing (54) being slightly divergent from the bottom to the top of the container (5).

7. A container according to any one of claims 1 to 6, **characterised in that** the container (5) has a cover (7) comprising a central opening (70) for the introduction of food.

8. A container according to any one of claims 1 to 7, **characterised in that** the bottom (50) and the casing (54) of the container define a cavity having, on the entire periphery of the rotary tool (6), a wall at least 1 cm away from the trajectory taken by the end of the lower blade (61) of the rotary tool.

9. An electrical household food preparation appliance comprising a housing (1) containing a motor (10) and comprising a working container (5) comprising a rotary tool (6) driven in rotation by said motor (10), **characterised in that** said container conforms to one of claims 1 to 8.
